# EUROPÄISCHE PATENTSCHRIFT

(11) **EP 0 947 087 B1**
(45) Veröffentlichungstag und Bekanntmachung des Hinweises auf die Patenterteilung: **26.07.2006**
(21) Anmeldenummer: 97951197.9
(22) Anmeldetag: 14.11.1997
(51) Int. Cl.: H04M 11/00, H04L 9/32

(54) **VERFAHREN UND VORRICHTUNG ZUM FERNBEDIENEN UND FERNSTEUERN VON EINRICHTUNGEN UND GERÄTEN ÜBER EIN TELEFONNETZ**
METHOD AND DEVICE FOR THE REMOTE OPERATION AND REMOTE CONTROL OF SYSTEMS AND APPARATUS VIA A TELEPHONE NETWORK
PROCEDE ET DISPOSITIF POUR UTILISER ET COMMANDER A DISTANCE DES DISPOSITIFS ET DES APPAREILS PAR L'INTERMEDIAIRE D'UN RESEAU TELEPHONIQUE

(30) Priorität: 10.12.1996 DE 19653712
(43) Veröffentlichungstag der Anmeldung: 06.10.1999
(73) Patentinhaber: Deutsche Telekom AG, 53113 Bonn (DE)
(72) Erfinder: STOLZ, Helmut, D-57080 Siegen (DE)
(86) Internationale Anmeldenummer: PCT/EP1997/006353
(87) Internationale Veröffentlichungsnummer: WO 1998/026560

(56) Entgegenhaltungen:
- EP-A- 0 637 004
- DE-A- 4 325 459
- FR-A- 2 680 592
- US-A- 5 119 412

## Beschreibung

Die Erfindung bezieht sich auf ein Verfahren der im Oberbegriff des Patentanspruchs 1 näher bezeichneten Art, sowie auf eine Vorrichtung der im Oberbegriff des Patentanspruchs 3 definierten Art. Derartige Verfahren und Vorrichtungen sind z. B aus FR-A-2 680 592, DE-A 42 12 200 und DE-A-43 25 459 bekannt.

Beispielsweise aus UK-A-2 2230 163, DE-A-36 24 162 und DE-A-42 28 071 bekannte Verfahren und Vorrichtungen dienen dazu, beliebige Einrichtungen und Geräte in Haushalten, Büroräumen, Unternehmungen usw. über ein Telefonnetz zu bedienen und zu steuern. Verfahrensweise, Aufbau und der Autorisierungsmechanismus ähneln denen, die bei der Fernabfrage und Steuerung von Telefon-Anrufbeantwortern üblich sind. Als Autorisierungsmechanismus wird allgemein ein Passwort- Verfahren verwendet, beispielsweise eine Ziffer als MFV- Wahlzeichen, und die Nutzinformationen werden im Klartext übermittelt. Die eigentlichen Steuerinformationen können verschwinden bzw. sich verändern. Ein unautorisierter Benutzer kann mittels bekannter Verfahren die Steuerinformationen manipulieren. Außerdem kann er sich durch Aufzeichnung der Kommunikation in den Besitz der Autorisierungsmechanismen bringen und selbständig neue Verbindungen aufbauen, ohne den originären Benutzer persönlich zu kompromittieren.

Um solches Verschwinden oder Ändern der Steuerinformationen und Nachahmungen der Identifizierungsinformationen sicherer zu begegnen ist aus FR-A-2 680 592 und DE-A 42 12 200 ein Fernbedienungssystem unter Verwendung einer IC- Karte und eines entfernten öffentlichen Fernsprechers bekannt, bei dem die Steuerinformation unter Verwendung der IC- Karte verschlüsselt wird, damit nur autorisierten Benutzern ein authentischer Zugriff auf die entsprechenden Einrichtungen möglich sein soll. Dabei sind einer Zentralstation und den Einrichtungen und Geräten Adapter zugeordnet, die von Fernsprechern aus mittels MFV- Wahlvorrichtung anwählbar und nach Autorisierung initiierbar sind. Den Benutzern bzw. den öffentlichen Fernsprechern sind Modems bzw. Sender für DTMF- Zeichen, eine Aufnahme für ein Sicherheitsmodul, ein personalisiertes Sicherheitsmodul, ein Kleinrechner , eine Tastatur und ein Display zugeordnet. Als Heimterminal sind der Zentralstation Schaltglieder für die zu bedienenden Geräte, ein Ver- und Entschlüsseler für die MFV- Zeichen, ein Kleinrechner, eine Tastatur und Anzeige zugeordnet. Dieses Heimterminal empfängt und entschlüsselt die verschlüsselten Steuerinformationen und steuert Haushaltsgeräte entsprechend den vom entfernten Fernsprecher erhaltenen und entschlüsselten Steuerinformationen.

Aufgabe der Erfindung ist es, daß nur autorisierten Benutzern ein authentischer Zugriff auf die entsprechenden Einrichtungen möglich sein soll. Die Nutzinformationen sollen vor unberechtigtem Zugriff und gezielter Manipulation geschützt werden.

Die Erfindung löst diese Aufgabe mit der im Kennzeichen des Patentanspruchs 1 beschriebenen Verfahrensweise.

Eine vorteilhafte Weiterbildungsmöglichkeit des Verfahrens ist im Kennzeichen des Patentanspruchs 2 angeführt.

Eine Vorrichtung, die zur Lösung dieser Aufgabe geeignet ist, ist im Kennzeichen des Patentanspruchs 3 beschrieben.

Die Erfindung wird nachfolgend anhand von Ausführungsbeispielen näher erklärt. In den zugehörigen Zeichnungen zeigen die
Fig. 1 eine Prinzipskizze der bekannten Vergleichs lösungen,
Fig. 2 eine Prinzipskizze einer Zentralstation Z und
Fig. 3 eine Prinzipskizze einer Außenstelle eines Benutzers X.

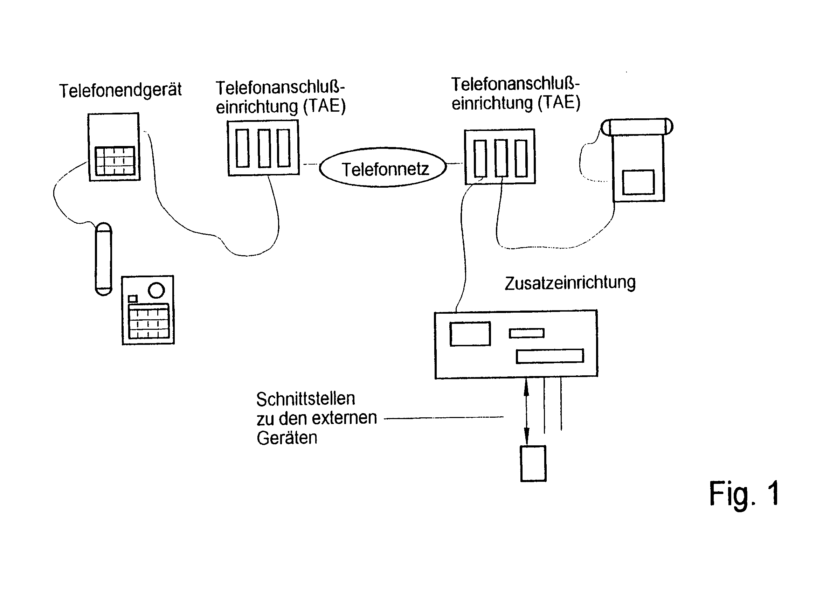

Die bekannten Vergleichslösungen, entsprechend Fig. 1, bedürfen keiner ausführlichen Erklärung, wenn sie mit der allgemein bekannten Fernabfrage eines Anrufbeantworters verglichen werden. Am Telefonendgerät des Benutzers wird, soweit dieses nicht für MFV-Wahl vorgesehen ist, ein MFV-Geber akustisch angekoppelt. Als Autorisierungsmechanismus dient die eingegebene Ziffer, auf die hin hier, anstelle eines Anrufbeantworters, eine Zusatzeinrichtung eingeschaltet wird. Deren ausgangsseitige Schnittstellen werden mit nachfolgenden offenen Zeichen gesteuert.

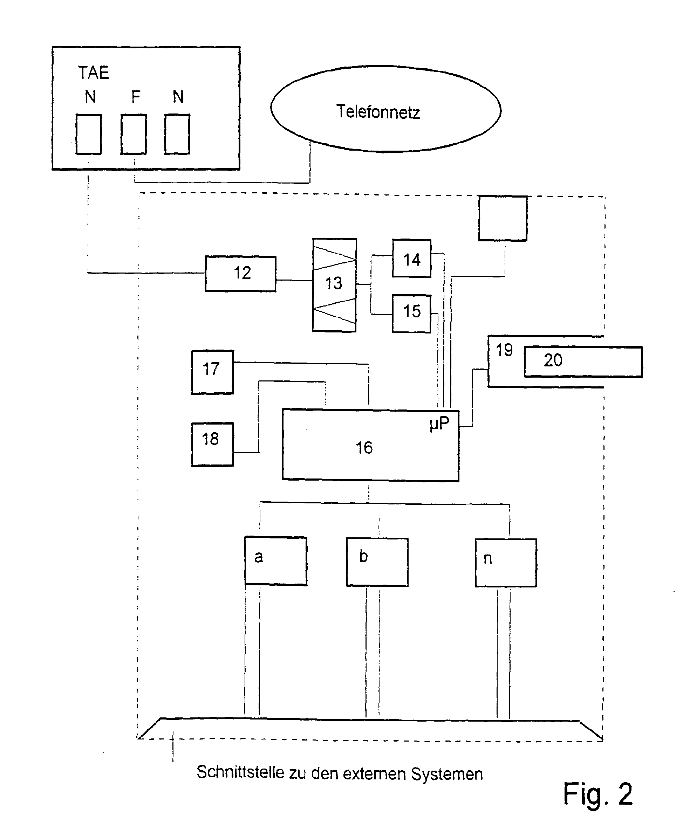

Die Zusatzeinrichtung einer Zentralstation Z (für analoge Fernsprechanschlüsse) besteht nach Fig. 2 aus einer Anschlußeinheit für Telefonnetz TAE, einer Rufstromunterdrückung mit Übertrager 12, Verstärker 13, einem Empfänger/Decodierer für die MFV-Zeichen 14, bei vorgesehener Rückinformation einem MFV-Sender DTMF (Dual Tone Multiple Frequence) 15, einem Kleinrechner 16, einer Tastatur 17, einem Display (Anzeigefeld) 18, einer Aufnahme 19 für einen personalisierten Sicherheitsmodul 20, sowie Schaltgliedern a, b, bis n mit ihren Schnittstellen für die Steuerung von diversen Adaptern.

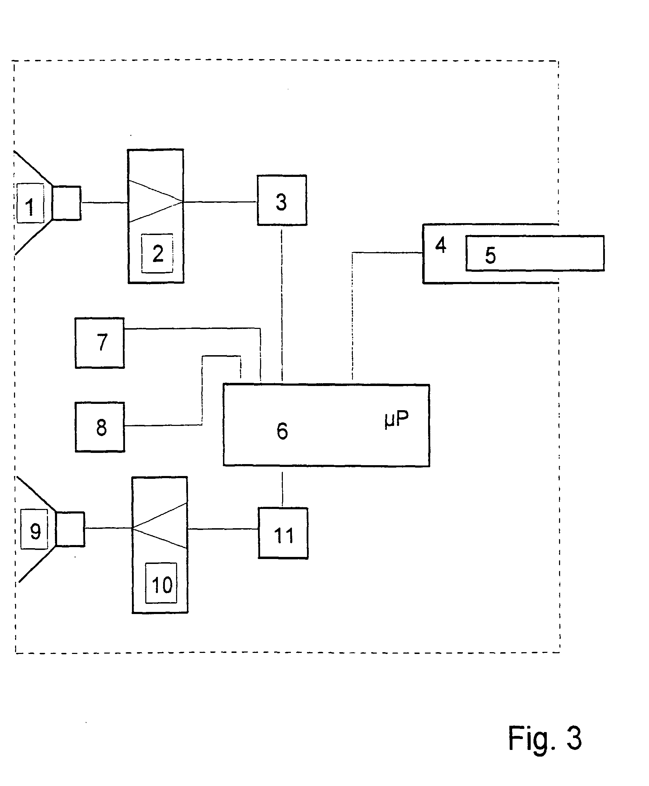

Eine Endeinrichtung für Benutzer X besteht, entsprechend Fig. 3, aus einem Mikrofon 1, einem Verstärker 2, einem Empfänger für DTMF (Dual Tone Multiple Frequence)-Zeichen 3, einer Aufnahme 4 für einen personalisierten Sicherheitsmodul 5, aus einem Kleinrechner 6, einer Tastatur 7, einer Anzeigeeinheit (Display) 8, einem MFV-Sender DTMF (Dual Tone Multiple Frequence) 9 und einem Verstärker mit Lautsprecher 10. Die zur Initialisierung der einzelnen Funktionen benutzten Mehrfrequenzsender enthalten eine Aufnahme- und Leseeinrichtung 4 für personalisierbare Sicherheitsmodule 5. Als solcher Sicherheitsmodul SM 5 kann z. B. eine personalisierbare CPU-Chipkarte (ICC) und eine Sicherheitssoftware verwendet werden, um die SM anzusprechen.

Der Benutzer erhält ein personalisiertes SM. Als logischer Zugriffsschutz zum SM kann ein PIN (personal identification number)-Mechanismus verwendet werden. (Damit besteht das persönliche Identifikationsmerkmal aus den Komponenten "Wissen" und "Besitz".) Das personalisierte SM 5 enthält unauslesbar gespeicherte individuelle kryptografische Schlüssel. Das SM verschlüsselt und entschlüsselt u. a. die Nutzinformationen und wird für die gegenseitige Authentikation Benutzer und zentrale Einrichtung verwendet.

Die zentrale Einrichtung enthält ebenfalls eine Aufnahme- und Leseeinrichtung 19 für personalisierbare Sicherheitsmodule SM 20, die z. B. ebenfalls aus einer personalisierbare CPU-Chipkarte (ICC) und einer Sicherheitssoftware bestehen kann, um die SM anzusprechen.

Die Sicherheitsmodule SM im Mehrfrequenzsender 5 und in der Zentraleinrichtung 20 besitzen identische kryptographische Schlüssel für diesen Benutzer. Das heißt, für jede Kombination Benutzer SM und SM in der Zentraleinrichtung werden individuelle Schlüssel benutzt.

Die Informationsinhalte für Verbindungseröffnung usw. sind in der Zentraleinrichtung programmierbar.

Der Benutzer steckt sein personalisiertes Sicherheitsmodul SM (z. B. eine Chipkarte) in seien Mehrfrequenzsender und gibt seine PIN (Personal Identifikation Number) ein. Die PIN wird zum SM gesendet und dort verifiziert. Bei richtiger PIN ist der Zugang zum SM geöffnet und am Mehrfrequenzsender des Benutzers X wird ein akustisches oder optisches Signal gesetzt (z. B. eine Leuchtdiode oder ein Ton bestimmter Frequenz). Nun wählt der Benutzer die Verbindung zu seiner Zentralstation Z über das Telefonnetz und diese leitet eine gegenseitige Authentikation mit der Endeinrichtung X (mit bekannten challenge and response Verfahren für asymmetrische bzw. symmetrische Verschlüsselungsverfahren) ein. Nach Abschluß einer erfolgreichen Authentikation wird der Benutzer durch ein Signal von der Zentralstation Z aufgefordert, seine Befehle für die Bedien- Steuerungs- bzw. Überwachungsinformationen einzugeben. Diese werden dann im SM 5 des Benutzers X mit seinem personalisierten kryptographischen Schlüssel verschlüsselt und als verschlüsselte Information zur Zentralstation Z gesendet.

Die Zentralstation Z entschlüsselt die empfangenen Informationen als Befehle und sendet dann diese Befehle an die entsprechenden Adapter der Einrichtungen.

Um Manipulationen möglicher Angreifer noch sicher zu vermeiden, kann die Information im Klartext und unmittelbar danach verschlüsselt gesendet werden. Nach Empfang beider Informationen bildet die Zentralstation Z auch aus dem Klartext ein gleiches verschlüsseltes Produkt und vergleicht dieses mit dem von der Endeinrichtung X empfangenen verschlüsselten Produkt und gibt den entsprechenden Befehl nur bei positiven Prüfergebnis an die Adapter bzw. Einrichtungen weiter. Eine Rückmeldung der Information von der Zentralstation Z an den Benutzer X kann die Sicherheit weiter erhöhen.

### Liste der verwendeten Bezugszeichen:

- X =: Benutzerstation, bestehend aus:

- 1 =: Mikrofon
- 2 =: Verstärker
- 3 =: Empfänger für DTMF
- 4 =: Aufnahme für personalisierten Sicherheitsmodul
- 5 =: personalisierter Sicherheitsmodul
- 6=: Kleinrechner
- 7 =: Tastatur
- 8 =: Anzeigeeinheit (Display)
- 9 =: MFV- Sender DTMF
- 10=: Verstärker mit Lautsprecher

- Z =: Zentralstation, Zusatzeinrichtung bestehend aus:

- TAE =: Anschlußeinheit für Telefonnetz
- 12 =: Rufstromunterdrückung mit Übertrager
- 13 =: Verstärker
- 14 =: Empfänger/Decodierer für MFV- Zeichen
- 15 =: MFV- Sender
- 16 =: Kleinrechner
- 17 =: Tastatur
- 18 =: Display (Anzeigefeld)
- 19 =: Aufnahme für personalisierten Sicherheitsmodul
- 20 =: personalisierter Sicherheitsmodul
- a,b...n =: Schaltgliedermit Schnittstellen für die Steuerung

## Patentansprüche

1. Verfahren zum Fernbedienen und Fernsteuern von Einrichtungen und Geräten über ein Telefonnetz, bei dem von beliebigen Anschlußstellen aus Verbindungen zu einer Zentralstation hergestellt werden, über die, mittels MFV- Wahl und Autorisierung, den Einrichtungen und Geräten zugeordnete Adapter angesteuert werden, die Zustandsabfragen bzw. Betätigungen initiieren und bei dem das Herstellen von Verbindungen von der Zentralstation zu den Adaptern von der Verwendung einer IC-Karte und einer Identifizierung abhängig gemacht wird, bei der sich der Benutzer gegenüber der Zentralstation vor seiner MFV- Wahl mit einer aus "Schlüssel" und "Geheimnis" gebildeten verschlüsselten Information ausweist, **dadurch gekennzeichnet, daß** die Verbindung von einer gegenseitigen Authentikation zwischen dem Benutzer und der Zentralstation abhängig gemacht wird, bei der diese nach der Identifizierung des Benutzers mittels des bekannten challenge and response Verfahrens einleitet wird, und daß erst nach dessen erfolgreichem Abschluß die Bereitschaft zur Verbindung mit einem Adapter mit einem ersten Bereitsignal quittiert wird, daß danach, ebenso verschlüsselt, Adapter und Betätigungsart(en) gewählt werden, was durch Zustandssignale bzw. ein weiteres Bereitsignal quittiert wird.

2. Verfahren nach Anspruch 1, **dadurch gekennzeichnet, daß** nach Empfang des Zustandssignal bzw. zweiten Bereitsignals vom Benutzer die Befehle im Klartext und zusätzlich nach Verschlüsselung in seinem SM verschlüsselt zur Zentralstation gesendet werden und daß diese vor der Weitergabe des Befehls an das Adapter von der Klartextinformation das verschlüsselte Produkt bildet und dieses mit dem empfangenen verschlüsselten Produkt vergleicht und den Befehl nur bei positiven Prüfergebnis weitergibt .

3. Vorrichtung zum Fernbedienen und Fernsteuern von Einrichtungen und Geräten über ein Telefonnetz, bei dem einer Zentralstation und den Einrichtungen und Geräten Adapter zugeordnet sind, die von Fernsprechern aus mittels MFV- Wahlvorrichtung anwählbar und nach Autorisierung initiierbar sind, und bei der den Benutzern bzw. deren Stationen Sender für DTMF- Zeichen, eine Aufnahme für ein Sicherheitsmodul, ein personalisiertes Sicherheitsmodul, ein Kleinrechner , eine Tastatur und ein Display und bei der der Zentralstation Schaltglieder, ein Ver- und Entschlüsseler für die MFV- Zeichen, ein Kleinrechner, eine Tastatur und Anzeige zugeordnet sind, **dadurch gekennzeichnet, daß** zur Verbindung mit beliebigen Anschlußstellen auch der Zentalstation (Z) eine Aufnahme für ein Sicherheitsmodul (19) für ein personalisiertes Sicherheitsmodul (20) zugeordnet ist, mit welchen die Verbindungen zu den Adaptern nur nach erfolgreicher gegenseitiger Authentikation und nach einer von einer Außenstelle gesendeten verschlüsselten Information freigebbar sind, die dort gebildet und in MFV- Informationen umgesetzt sind.

## Claims

1. Method for remote operation and remote control of devices and equipment over a telephone network, wherein connections are established from any desired terminals to a central station in order to operate, by means of DTMF dialing and authorization, adapters that are associated with the devices and equipment and that initiate status queries and actuations, and wherein the establishment of connections from the central station to the adapters is dependent on the use of an IC card and an identification, wherein the user identifies himself to the central station before his DTMF dialing with an encrypted item of information composed of a "key" and "secret," **characterized in that** the connection is dependent on a mutual authentication between the user and the central station, wherein said authentication is initiated by means of the prior art challenge and response method following identification of the user, and **in that** readiness for connection to an adapter is acknowledged with a first ready signal only after successful conclusion of said authentication, and **in that** adapter and actuation type(s), likewise in encrypted form, are subsequently selected, this process being acknowledged by status signals or an additional ready signal.

2. Method according to claim 1, **characterized in that** following reception by the user of the status signal or second ready signal, the commands are transmitted to the central station in clear text and also in encrypted form after encryption in the user's SM, and **in that** the central station produces the encrypted product from the clear text information before forwarding the command to the adapter, and compares this encrypted product to the received encrypted product and only forwards the command in the event of a positive test result.

3. Apparatus for remote operation and remote control of devices and equipment over a telephone network, wherein adapters that can be dialed from telephones by means of DTMF dialing devices and that can be initialized after authorization are associated with a central station and with the devices and equipment, and wherein transmitters for DTMF characters, a security module receptacle, a personalized security module, a small computer, a keypad and a display are associated with the users or their stations, and wherein logic elements, an encrypter and decrypter for the DTMF characters, a small computer, a keypad and a display are associated with the central station, **characterized in that** for connection with any desired terminals, the central station (Z) also has associated with it a security module receptacle (19) for a personalized security module (20) with which the connections to the adapters can only be enabled after successful mutual authentication and after an item of encrypted information transmitted from an external station, where said information is produced and converted into DTMF information.

## Revendications

1. Procédé de télécommande et de téléguidage de dispositifs et d'appareils par l'intermédiaire d'un réseau téléphonique permettant, à partir de points d'accès quelconques, d'établir des liaisons avec une station centrale, par l'intermédiaire de laquelle des adaptateurs associés aux dispositifs et appareils sont commandés moyennant une numérotation MFV et autorisation, lesdits adaptateurs déclenchant des interrogations d'état ou des actionnements, et dans lequel l'établissement de liaisons depuis la station centrale vers les adaptateurs est subordonné à l'utilisation d'une carte IC et d'une identification au cours de laquelle l'usager s'identifie vis-à-vis de la station centrale, avant sa numérotation MFV, moyennant une information formée par une « clé publique» et une « clé privée », **caractérisé en ce que** la liaison est subordonnée à une authentification réciproque entre l'usager et la station centrale, ladite authentification étant déclenchée, après l'identification de l'usager, moyennant la procédure « challenge and response » connue, et **en ce qu'**uniquement après sa réalisation réussie la disponibilité pour l'établissement d'une liaison avec un adaptateur est confirmée par un premier signal « prêt », et **en ce que**, ensuite, l'adaptateur et le(s) mode(s) d'actionnement sont sélectionnés, également de manière chiffrée, le choix étant confirmé par des signaux d'état ou par un deuxième signal « prêt ».

2. Procédure selon la revendication 1, **caractérisé en ce qu'**après la réception du signal d'état ou du deuxième signal « prêt »de l'usager, les commandes sont envoyées à la station centrale en texte clair et de manière chiffrée, après chiffrement dans son module de sécurité (SM), et **en ce que**, avant de transmettre la commande à l'adaptateur, la station centrale forme le produit chiffré à partir de l'information en texte clair, puis le compare avec le produit chiffré reçu et transmet la commande seulement en cas de résultat positif de la vérification.

3. Dispositif pour la télécommande et le téléguidage de dispositifs et d'appareils par l'intermédiaire d'un réseau téléphonique, dans lequel des adaptateurs sont associés à une station centrale et aux dispositifs et appareils, lesdits adaptateurs pouvant être sélectionnés à partir de postes d'usagers moyennant un dispositif de numérotation MFV et déclenchés après autorisation, dans lequel des émetteurs de caractères DTMF, un support de module de sécurité, un module de sécurité personnalisé, un mini-ordinateur, un clavier et un affichage sont associés aux usagers ou à leur stations, et dans lequel des éléments de commutation, un chiffreur et un déchiffreur de caractères MFV, un mini-ordinateur, un clavier et un affichage sont associés à la station centrale, **caractérisé en ce que**, pour l'établissement d'une liaison avec des points d'accès quelconques, un support de module de sécurité (19) destiné à recevoir un module de sécurité personnalisé (20) est associé à la station centrale (Z), les liaisons avec les adaptateurs ne pouvant être autorisées qu'après authentification réciproque réussie et après une information chiffrée envoyée par un poste extérieur où ladite information à été formée et transformée en informations MFV.
